# EUROPÄISCHE PATENTSCHRIFT

(11) **EP 2 396 862 B1**
(45) Veröffentlichungstag und Bekanntmachung des Hinweises auf die Patenterteilung: **09.09.2015**
(21) Anmeldenummer: 10702827.6
(22) Anmeldetag: 28.01.2010
(51) Int. Cl.: H02B 1/20

(54) **GESCHLOSSENES SAMMELSCHIENENSYSTEM ZUR NIEDERSPANNUNGSVERTEILUNG**
ENCLOSED BUSBAR SYSTEM FOR LOW VOLTAGE DISTRIBUTION
SYSTÈME BARRES OMNIBUS FERMÉ POUR DISTRIBUTION BASSE TENSION

(30) Priorität: 13.02.2009 DE 102009010457
(43) Veröffentlichungstag der Anmeldung: 21.12.2011
(73) Patentinhaber: Schmid, August, 3753 Pernegg (AT)
(72) Erfinder: Schmid, August, 3753 Pernegg (AT)
(74) Vertreter: DREISS Patentanwälte PartG mbB
(86) Internationale Anmeldenummer: PCT/EP2010/000513
(87) Internationale Veröffentlichungsnummer: WO 2010/091788

(56) Entgegenhaltungen:
- DE-A1- 4 308 025

## Beschreibung

Die vorliegende Erfindung bezieht sich auf ein geschlossenes Sammelschienensystem zur ein- oder dreiphasigen insbesondere Niederspannungsverteilung nach dem Oberbegriff des Anspruchs 1.

Bei den derzeit eingesetzten geschlossenen Sammelschienensystemen ist der Sammelschienenkörper ein quaderförmiges Gebilde, aus dessen mindestens einer Stirnwand die längsverlaufenden Phasenschienen herausragen, so dass sie mit einem angrenzenden Leistungsschalter verbunden werden können. Der Leistungsschalter ist üblicherweise mit seinem Gehäuse sehr nahe am Sammelschienenkörper angeordnet, wobei lediglich ein relativ schmaler Spalt, nicht zuletzt aus Sicherheitsgründen, besteht. Mit anderen Worten, die betreffende zumindest teilweise offene Stirnseite des Leistungsschalters und die betreffende Stirnwand des Sammelschienenkörpers verlaufen parallel zueinander unmittelbar einander gegenüberliegend. Dies bedeutet, dass dann, wenn ein Lichtbogen beim Abschalten eines Kurzschlusses auftritt, die dadurch erzeugten ionisierten Gase aus der Funkenkammer des Leistungsschalters heraus gegen die geschlossene Stirnwand des Sammelschienenkörpers gedrückt werden, wodurch sich ein Stau dieser ionisierten Gase in dem Spalt zwischen Leitungsschalter und Sammelschienenkörper bildet. Da die ionisierten Gase elektrisch leitend sind, kann es in diesem Zeitpunkt zu einem Kurzschluss des Sammelschienensystems kommen, was zur Abschaltung eines ganzen Hauptstromkreises führen kann.

Aufgabe der vorliegenden Erfindung ist es deshalb, ein geschlossenes Sammelschienensystem der eingangs genannten Art zuschaffen, bei dem die aus der Funkenkammer des Leistungsschalters ausgebrachten ionisierten Gase an der Stirnwand des Sammelschienenkörpers besser und schneller abströmen können.

Zur Lösung dieser Aufgabe sind bei einem geschlossenen Sammelschienensystem der genannten Art die im Anspruch 1 angegebenen Merkmale vorgesehen.

Durch die erfindungsgemäßen Maßnahmen ist erreicht, dass die aus der Funkenkammer des Leistungsschalters abströmenden ionisierten Gase statt gegen die geschlossene Stirnwand des Sammelschienenkörpers zu prallen, in die Ausnehmung im Sammelschienenkörper und aus dieser heraus abströmen können. Aufgrund dieses verlängerten Abströmweges ist ein Stau der ionisierten Gase vor dem Sammeischienenkörper vermieden, so dass die beim Abschalten eines Kurzschlusses entstehenden ionisierten Gase in vorteilhafter Weise auch abgekühlt sowie mehr oder weniger drucklos und stanlos an die Umgebung abgegeben werden können.

Vorteilhafte Ausgestaltungen ergeben sich aus den Merkmalen des Anspruchs 2 und/oder 3.

Je nach Anordnung der Kontakte des Leistungsschalters gegenüber denen des Sammelschienensystems, das heißt ob zur Sichtseite oder zur Rückseite des Sammelschienensystems hin, sind die Merkmale nach Anspruch 4 vorgesehen sind.

Bei einem aus der DE 43 08 025 A1 bekannten Sammelschienensystem sind die im Sammelschienen-Isoliergehäuse angeordneten längsverlaufenden Phasenschienen in Kammern angeordnet, von denen die mittlere Kammer an einer Seite offen ist, die gegenüber den offenen Seiten der beiden äußeren Kammern abgewandt ist.

Die Kammer der mittleren Phasenschiene ist dabei mit einem V-förmigen Bodenabschnitt versehen. Dadurch sind die einzelnen Kammern aufgrund der einander abgewandten offenen Seiten gegeneinander abgeschirmt, so dass die Gefahr von Überschlägen bei Tropf- oder Kondenswasser vermieden ist.

Gemäß der Erfindung ist bei einer zur Sichtseite hin vorgesehenen Ausnehmung erreicht, dass ein Fingerschutz aus Sicherheitsgründen gewährleistet ist. Entsprechendes gilt für die Merkmale nach Anspruch 5. Ist die Ausnehmung zur Rückseite bzw. der zur Sichtseite abgewandten Seite hin aufgrund der Anordnung der Kontakte des Leistungsschalters angeordnet, sind die Merkmale nach Anspruch 6 vorgesehen. Ein Fingerschutz aus Sicherheitsgründen erübrigt sich hierbei.

Die vorliegende Erfindung bezieht sich gemäß Ansprüch 7 des weiteren auf ein Niederspannungsverteilsystem mit einem Leistungsschalter und einem damit elektrisch verbundenen geschlossenen Sammelschienensystem nach den Merkmalen des Anspruchs 1 und ggf. mindestens einem der folgenden Ansprüche.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: ein Niederspannungsverteilsystem mit einem Leistungsschalter und einem damit verbundenen geschlossenen Sammelschienensystem gemäß einem bevorzugten Ausführungsbeispiel vorliegender Erfindung und
- Figur 2: in perspektivischer teilweise abgebrochener Darstellung eine Ansicht gemäß Pfeil II der Figur 1 des geschlossenen Sammelschienensystems.

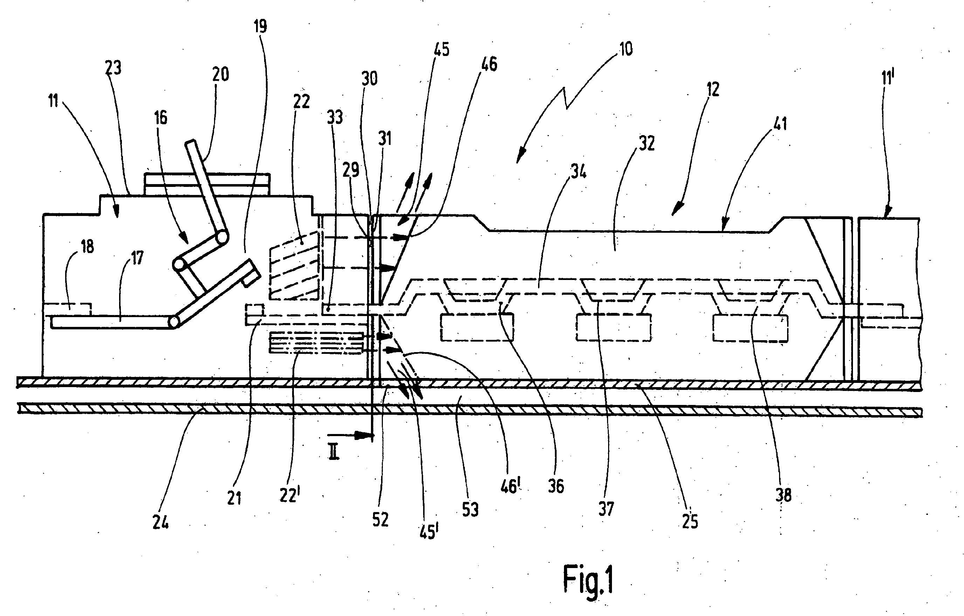

Figur 1 zeigt in schematischer Schnittdarstellung ein Beispiel eines Niederspannungsverteilsystems 10, von dem ein ein- oder dreiphasiger Leistungsschalter 11 sowie ein damit verbundenes geschlossenes Sammelschienensystem 12 gemäß einem bevorzugten Ausführungsbeispiel vorliegender Erfindung dargestellt ist. Das geschlossene Sammelschienensystem 12 dient der ein- oder dreiphasigen Spannungsverteilung im beispielsweise Niederspannungsbereich von 400/230V (einphasig) bzw. 380/400 Volt (dreiphasig) und wird über eine Montageplatte 25 an einer Gebäudewand oder dergleichen und von einem Schaltschrank umgeben angeordnet. Dabei ist das geschlossene Sammelschienensystem 12 sowohl für Unterverteiler als auch für Endverteiler geeignet.

Der Leistungsschalter 11 besitzt eine bewegliche Kontaktanordnung 16, deren ortsfeste Leiterschiene 17 mit einer Zuleitung 18 verbindbar bzw. verbunden ist und deren durch eine Handhabe 20 beweglicher Kontakt 19 mit einer ortsfesten Leiterschiene 21 verbindbar und von dieser trennbar ist. Oberhalb der ortsfesten Leiterschiene 21 bzw. zur Sichtseite hin ist eine Funkenkammer 22 angeordnet, die zum benachbarten geschlossenen Sammelschienensystem 12 hin offen ist.

Der Leistungsschalter 11 ist von einem Gehäuse 23 umgeben, aus deren Sichtseite die Handhabe 20 herausragt und deren der Sichtseite abgewandte Rückseite auf einer Montageplatte 25 entweder unmittelbar oder mittelbar über eine im Abstand hiervon angeordnete Gehäuserückwand 24 verbunden ist.

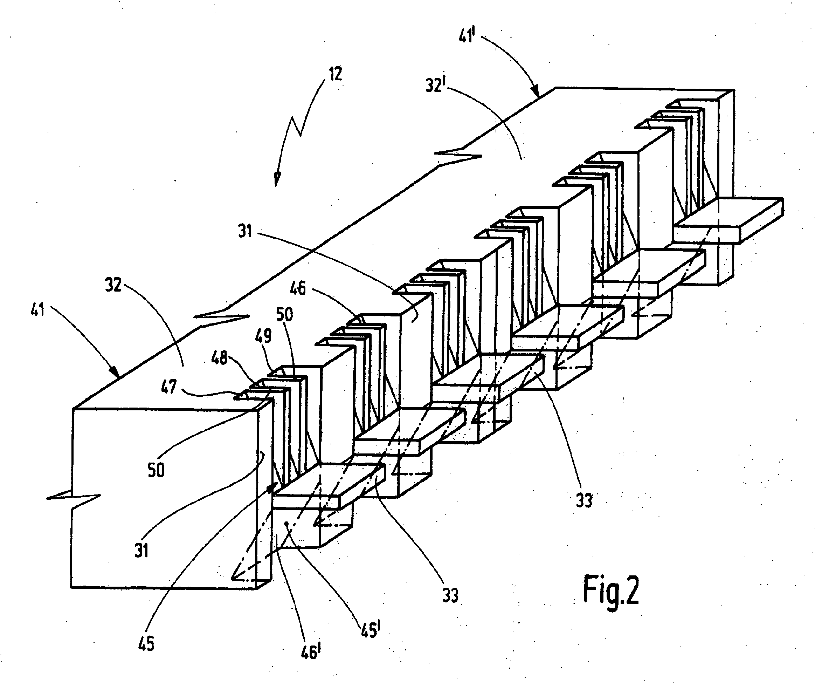

Der zumindest teilweise offenen Stirn 29 des Gehäuses 23 des Leistungsschalters 11 gegenüber ist unter Freilassen eines geringen Spaltes bzw. Raumes 30 die Stirnwand 31 eines elektrischen Isoliergehäuses 32 (Figur 2) des geschlossenen Sammelschienensystems 12 angeordnet. Aus dem elektrischen Isoliergehäuse 32 ragen an deren geschlossenen Stirnwand 31 die freien Enden 33 von Phasenschienen 34, die mit den ortsfesten Leiterschienen 21 des Leistungsschalters 11 verbindbar bzw. verbunden sind. Figur 2 zeigt beispielsweise eine dreiphasige Anordnung von Phasenschienen 34 mit ihm aus dem Isoliergehäuse 32 vorstehenden Enden 33 innerhalb eines Isoliergehäuse-Moduls 12. Figur 1 zeigt, dass quer zu den beispielsweise dreiphasig angeordneten Phasenschienen 34 Abzweigschienen 36, 37 und 38 angeordnet sind, von denen jede mit der ihr zugeordneten Phasenschiene 34 bei einem dreiphasigen System verbunden ist. Diesem mit dem Leistungsschalter 11 verbundenen Verteilermodul 41 kann ein weiterer Leistungsschalter 11' im Zuge der Phasenschienen 34 in Reihenanordnung folgen (Figur 1).

Figur 2 zeigt, dass dem dreiphasigen Verteilermodul 41 ein weiteres mit einem weiteren dreiphasigen Leistungsschalter 11 verbundenes Verteilermodul 41' benachbart sein kann.

Das elektrische Isoliergehäuse 32 kann entweder durch ein Vergussgehäuse gebildet sein oder durch mehrere Isolierstoffteile aufgebaut sein, in die die Phasenschienen 34 und Abzweigschienen 36 bis 38 eingelegt und gehalten sind.

Da der Abstand (Spalt 30) zwischen dem Gehäuse 23 des Leistungsschalters 11 und dem Isoliergehäuse 32 des geschlossenen Sammelschienensystems 12 derart gering ist, dass ein Eindringen mittels Finger oder eines üblichen Werkzeugs nicht möglich ist, ist der dadurch gebildete Raum zum Ableiten von bei einer Kurzschlusstrennung mittels des Leistungsschalters 11 auftretenden ionisierten Gasen zu klein, mit der Folge, dass sich die elektrisch leitenden ionisierten Gase stauen und zu einem Folgeabschalten eines Hauptstromkreises führen können. Aus diesem Grunde ist erfindungsgemäß die Stirnwand 31 des Isoliergehäuses 32 des geschlossenen Sammelschienensystems 12 im Bereich der ortsfesten Leiterschiene 21 bzw. des freien Endes 33 der Phasenschiene 34 jeder Phase und der offenen Stirn der Funkenkammer 22 gegenüberliegend mit einer Ausnehmung 45 versehen. Die Ausnehmung 45 ist durch eine Schrägfläche 46 begrenzt, die am Austrittschlitz des freien Endes 33 der Phasenschiene 34 des Isoliergehäuses 32 beginnt und unter einem Winkel von beispielsweise zwischen 30° und 45° schräg zur Sichtseite des Isoliergehäuses 32 hin verläuft. Die Schrägfläche 46 besitzt eine der Phasenschienen 34 entsprechende Breite und ist durch Lamellen 50 (Figur 2) für einen ausreichenden Fingerschutz unterbrochen. Mit anderen Worten die Schrägfläche 46 ist in drei Flächenabschnitte 47, 48 und 49 durch zwei parallele Lamellen 50 unterteilt. Die Lamellen 50 verlaufen entsprechend den Schnittflächen der seitlichen Begrenzungswände des Isoliergehäuses 32 für die Schrägfläche 46. Die Anzahl bzw. Abstände der Lamellen 50 voneinander entspricht einem vorgegebenen Sicherheitsschutz, um das Eindringen mit den Fingern eines Bedienenden zu verhindern. Auf diese Weise kann das aus der Funkenkammer 22 strömende elektrisch leitende ionisierte Gas durch die einen größeren Freiraum bildende Schrägfläche 46 staulos nach außen abgeleitet werden.

Die vorbeschriebene Ausgestaltung vorliegender Erfindung wird dann verwendet, wenn die Funkenkammer 22 zur Sichtseite des Leistungsschalters 11 hinweist und damit dieser zugeordnet und zugewandt die Schrägfläche 46 im Isoliergehäuse 32 des geschlossenen Sammelschienensystems 12 (ebenfalls) zu deren Sichtseite hin verläuft. Dies ist dann der Fall, wenn, wie Figur 1 zeigt, der bewegliche Kontakt 16 zwischen Sichtseite und ortsfester Leiterschiene angeordnet ist.

Eine weitere Ausgestaltung der Erfindung die in den Figuren 1 und 2 strichpunktiert dargestellt ist, wird dann eingesetzt, wenn die Anordnung von beweglichem Kontakt 16 und ortsfester Leiterschiene 21 umgekehrt ist und somit die Funkenkammer 22' des Leistungsschalters 11 und damit die Schrägfläche 46' im Isoliergehäuse 32 der Sichtseite abgewandt und damit der Montageseite von Leistungsschalter 11 und Sammelschienensystem 12 des Niederspannungsverteilsystems 10 zugewandt angeordnet sind.

Aus der Zeichnung ist ersichtlich, dass die Funkenkammer 22' unterhalb der mit dem freien Ende 33 der Phasenschiene 34 verbundenen ortsfesten Leiterschiene 21 angeordnet und ebenfalls zum Isoliergehäuse 32 des Sammelschienensystems 12 offen ist. Dieser Funkenkammer 22' gegenüberliegend ist die Schrägfläche 46' vorgesehen, die an der Unterkante des das freie Ende 33 der Phasenschiene 34 durchdringenden Schlitzes im Isoliergehäuse 32 beginnt und unter einem entsprechenden Winkel dem Leistungsschalter 11 abgewandt verläuft. Die Ausnehmung 45, die von der Schrägfläche 46 begrenzt ist, mündet in eine Öffnung 52 der Montageplatte 25, die parallel zur Gehäuserückwand 24 verläuft, wobei zwischen diesen beiden Bauteilen 24 und 25 aufgrund deren Abstand ein Raum 53 gebildet ist. Durch diesen Raum 53 können die elektrisch leitenden ionisierten Gase aus der Funkenkammer 22' nach außen abgeleitet werden, wenn sie durch die Ausnehmung 45' und die Öffnung 52 strömen. Bei dieser Ausgestaltung ist die Ausnehmung 45' gleich der Breite der Schrägfläche 46', da ein Fingersicherheitsschutz in diesem für eine Bedienungsperson unter Spannung nicht zugänglichen Bereich ohne Bedeutung ist.

## Patentansprüche

1. Geschlossenes Sammelschienensystem (12) zur ein- der dreiphasigen insbesondere Niederspannungsverteilung, mit in einem Sammelschienen-Isoliergehäuse (32) angeordneten längsverlaufenden Phasenschienen (34), deren mindestens eines aus dem Sammelschienen-Isoliergehäuse (32) herausragendes Ende (33) mit einem Leistungsschalter (11) verbindbar ist, wobei das Sammelschienen-Isoliergehäuse (32) an seiner Wandung, aus der die Phasenschienen (34) austreten und die dem Leistungsschalter (11) benachbart ist, mit einer den Freiraum zum benachbarten Leistungsschalter vergrößernden Ausnehmung (45) versehen ist, die durch eine Schrägfläche (46) begrenzt ist, **dadurch gekennzeichnet, dass** die Schrägfläche (46) von der Phasenschiene (34) ausgehend in eine Richtung weg vom benachbarten Leistungsschalter (11) führt und dass die der Sichtseite zugewandte Ausnehmung (45) durch mindestens eine die Wandung ergänzende Lamelle (50) für einen ausreichenden Fingerschutz unterbrochen ist.

2. Geschlossenes Sammelschienensystem nach Anspruch 1, **dadurch gekennzeichnet, dass** die Ausnehmung (45) über die Breite einer Phasenschiene (34) verläuft.

3. Geschlossenes Sammelschienensystem nach Anspruch 1 oder 2, **dadurch gekennzeichnet, dass** die Ausnehmung (45) in Flucht mit einer Funkenkammer (22) des Leistungsschalters (11) der einen oder anderen Oberfläche der Phasenschiene (34) benachbart ist.

4. Geschlossenes Sammelschienensystem nach einem der Ansprüche 1 bis 3 und 4, **dadurch gekennzeichnet, dass** die Schrägfläche (46) an der einen oder anderen Oberfläche der Phasenschiene (34) ansetzt.

5. Geschlossenes Sammelschienensystem nach einem der Anprüche 1 bis 4, **dadurch gekennzeichnet, dass** für jede Phasenschiene (34) im Abstand angeordnete benachbarte Ausnehmungsabschnitte (47, 48, 49) in der Wandung vorgesehen sind.

6. Geschlossenes Sammelschienensystem nach mindestens einem der vorhergehenden Ansprüche, **dadurch gekennzeichnet, dass** die der Sichtseite abgesandte Ausnehmüng (45) in eine Öffnung (52) in einer Montageplatte (25) des Sammelschienen-Isoliergehäuses (32) übergeht, die in einem Abstand zu einer Gehäuserückwand (24) des Sammelschienen-Isoliergehäuses (32) angeordnet ist.

7. Niederspannungsverteilsystem (10) mit einem Leistungsschalter (11) und einem damit elektrisch verbundenen geschlossenen Sammelschienensystem (12) nach Anspruch 1 und ggf. mindestens einem der folgenden Ansprüche.

## Claims

1. Enclosed busbar system (12) for single-phase or three-phase, in particular low voltage distribution, with longitudinal phase bars (34) arranged in a busbar insulation housing (32), wherein at least one end (33) of said busbars protruding from a busbar insulation housing (32) can be connected to a power switch (11), wherein the busbar insulation housing (32), on its wall from which the phase bars emerge and which is adjacent to the power switch (11), is provided with a recess (45) which enlarges the clearance from the adjacent power switch and is limited by a chamfer (46), **characterized in that** the chamfer (46) leads from the phase bar (34) in a direction away from the adjacent power switch (11), and that the recess (45) facing the visible side is interrupted by at least one leaf (5) completing the wall for adequate finger protection.

2. Enclosed busbar system according to claim 1, **characterized in that** the recess (45) runs over the width of a phase bar (34).

3. Enclosed busbar system according to claim 1 or 2, **characterized in that** the recess (45) in alignment with a spark chamber (22) of the power switch (11) is adjacent to the one or the other surface of the phase bar (34).

4. Enclosed busbar system according to any of claims 1 to 3, **characterized in that** the chamfer (46) is placed on the one or the other surface of the phase bar (34).

5. Enclosed busbar system according to any of claims 1 to 4, **characterized in that** for each phase bar (34), adjacent recess portions (47, 48, 49) arranged spaced apart are provided in the wall.

6. Enclosed busbar system according to at least one of the preceding claims, **characterized in that** the recess (45) facing away from the visible side transforms into an opening (52) in a mounting plate (25) of the busbar insulation housing (32), which opening is arranged at a distance from a housing rear wall (24) of the busbar insulation housing (32).

7. Low voltage distribution system (10) with a power switch (11) and, connected electrically thereto, an enclosed busbar system (12), in accordance with claim 1 and where applicable at least one of the following claims.

## Revendications

1. Système fermé de barres omnibus (12) pour la distribution monophasée ou triphasée d'une basse tension, pourvu de barres de phase (34) s'étendant longitudinalement, disposées dans un boîtier isolant (32) de barres omnibus, dont au moins une extrémité (33) faisant saillie du boîtier isolant (32) de barres omnibus peut être reliée à un sectionneur de puissance (11), de sorte que le boîtier isolant (32) de barres omnibus est pourvu, sur sa paroi de laquelle sortent les barres de phase (34) et qui est voisine du sectionneur de puissance (11), d'un évidement (45) agrandissant l'espace libre par rapport au sectionneur de puissance voisin, que délimite une surface inclinée (46),
**caractérisé en ce que** la surface inclinée (46) part des barres de phase (34) dans une direction s'éloignant du sectionneur de puissance (11), et **en ce que** l'évidement (45) faisant face à la surface visible est interrompu par au moins une lamelle (50) ajoutée à la paroi pour une protection suffisante des doigts.

2. Système fermé de barres omnibus selon la revendication 1, **caractérisé en ce que** l'évidement (45) s'étend sur la largeur d'une barre de phase (34).

3. Système fermé de barres omnibus selon la revendication 1 ou 2, **caractérisé en ce que** l'évidement (45) est aligné avec une chambre de soufflage (22) du disjoncteur (11), en un endroit adjacent à l'une ou l'autre surface de la barre de phase (34).

4. Système fermé de barres omnibus selon l'une quelconque des revendications 1 à 3 et 4, **caractérisé en ce que** la surface inclinée (46) est ajoutée sur l'une ou l'autre surface de la barre de phase (34).

5. Système fermé de barres omnibus selon l'une quelconque des revendicationsl à 4, **caractérisé en ce que** pour chaque barre de phase (34), des parties d'évidement adjacentes espacées (47, 48, 49) sont prévues dans la paroi.

6. Système fermé de barres omnibus selon au moins l'une des revendications précédentes, **caractérisées en ce que** l'évidement (45) opposé à la face visible passe dans une ouverture (52) situé dans une plaque de montage (25) du boîtier isolant (32) de barres omnibus, qui est agencée à une distance d'une paroi arrière de boîtier (24) du boîtier isolant (32) de barres omnibus.

7. Système de distribution de basse tension (10) ayant un sectionneur de puissance (11) et un système fermé de barres omnibus (12) connecté électriquement à celui-ci selon la revendication 1, et éventuellement au moins l'une des revendications qui suivent.
